# EUROPÄISCHE PATENTSCHRIFT

(11) **EP 2 683 581 B1**
(45) Veröffentlichungstag und Bekanntmachung des Hinweises auf die Patenterteilung: **10.08.2016**
(21) Anmeldenummer: 12700648.4
(22) Anmeldetag: 12.01.2012
(51) Int. Cl.: B60S 1/38

(54) **WISCHBLATTADAPTERVORRICHTUNG, INSBESONDERE FÜR EINE KRAFTFAHRZEUGSCHEIBENWISCHVORRICHTUNG**
WIPER BLADE ADAPTER DEVICE, IN PARTICULAR FOR A MOTOR VEHICLE WINDSCREEN WIPER DEVICE
DISPOSITIF D'ADAPTATEUR DE BALAI D'ESSUIE-GLACE CONÇU EN PARTICULIER POUR UN DISPOSITIF D'ESSUIE-GLACE DE VÉHICULE AUTOMOBILE

(30) Priorität: 07.03.2011 DE 102011005171
(43) Veröffentlichungstag der Anmeldung: 15.01.2014
(73) Patentinhaber: Robert Bosch GmbH, 70442 Stuttgart (DE)
(72) Erfinder: DEPONDT, Helmut, B-3010 Kessel-Lo (BE); BEX, Koen, B-3890 Jeuk/Limburg Belgien (BE); HERINCKX, Dirk, B-3350 Dries-Linter (BE)
(86) Internationale Anmeldenummer: PCT/EP2012/050428
(87) Internationale Veröffentlichungsnummer: WO 2012/119803

(56) Entgegenhaltungen:
- WO-A1-2010/016000
- DE-A1- 10 043 427
- DE-A1- 19 860 644
- DE-A1-102004 058 685
- FR-A1- 2 915 445

## Beschreibung

### Stand der Technik

Es ist bereits eine Wischblattadaptervorrichtung, insbesondere für eine Kraftfahrzeugscheibenwischvorrichtung, mit einem Wischblattadapter, der zumindest ein federelastisches Rastmittel zum Koppeln an eine Wischleisteneinheit aufweist bekannt.

WO-A-2010/016000 offenbart den Oberbegriff des Anspruchs 1. Offenbarung der Erfindung

Die Erfindung geht aus von einer Wischblattadaptervorrichtung, insbesondere für eine Kraftfahrzeugscheibenwischvorrichtung, mit einem Wischblattadapter der zumindest ein federelastisches Rastmittel zur Kopplung an eine Wischleisteneinheit aufweist.

Es wird vorgeschlagen, dass die Wischblattadaptervorrichtung zumindest ein Sicherungsmittel aufweist, das dazu vorgesehen ist, das zumindest eine Rastmittel in einem montierten Zustand zu sichern, wodurch eine besonders sichere Kopplung des Wischblattadapters mit einer Wischleisteneinheit erreicht werden kann. Unter einem "Wischblattadapter" soll in diesem Zusammenhang insbesondere ein Adapter verstanden werden, der dazu vorgesehen ist, einen Kopplungsbereich eines Wischblatts für eine Kopplung mit einem Wischarmadapter bereitzustellen. Unter einem "Rastmittel" soll in diesem Zusammenhang insbesondere ein federelastisches Mittel zur Herstellung einer Rastverbindung verstanden werden, das dazu vorgesehen ist, bei einer Montage elastisch ausgelenkt zu werden. Bevorzugt ist das zumindest eine Rastmittel in einem montierten Zustand mit zumindest einem Bauteil formschlüssig verbunden. Unter einem "Koppeln" soll dabei in diesem Zusammenhang insbesondere ein kraft- und/oder formschlüssiges Verbinden verstanden werden. Unter einer "Wischleisteneinheit" soll dabei in diesem Zusammenhang insbesondere eine Einheit verstanden werden, die dazu vorgesehen ist, einen Wischblattadapter mit einer Wischlippe zu verbinden. Unter einem "Sicherungsmittel" soll in diesem Zusammenhang insbesondere ein Mittel verstanden werden, das dazu vorgesehen ist, ein Rastmittel in dem montierten Zustand in seiner Bewegungsfreiheit einzuschränken und/oder eine unerwünschte Bewegung aus einer Verriegelungsposition heraus zu vermeiden. Unter "sichern" soll in diesem Zusammenhang insbesondere ein Einschränken zumindest eines Freiheitsgrads eines Bauteils verstanden werden, wobei der Freiheitsgrad für eine Bewegung des Bauteils aus einer Verriegelungsposition heraus dient. Unter einer "Verriegelungsposition" soll in diesem Zusammenhang insbesondere eine Position eines Bauteils verstanden werden, die es in einem vorgesehenen montierten Zustand einnimmt. Bevorzugt weisen die federelastischen Bauteile in der Verriegelungsposition eine geringere Federspannung auf als in einem ausgelenkten Zustand. Unter "vorgesehen" soll insbesondere speziell ausgelegt und/oder ausgestattet verstanden werden.

Nach der Erfindung wird vorgeschlagen, dass das zumindest eine Sicherungsmittel dazu vorgesehen ist, bei einem Montagevorgang des Wischblattadapters mit der Wischleisteneinheit aus einer Verriegelungsposition federelastisch ausgelenkt zu werden. Dadurch kann der Montagevorgang besonders einfach und schnell durchgeführt werden.

Ist das zumindest eine Rastmittel in eine Richtung beweglich gelagert und das zumindest eine Sicherungsmittel in eine weitere, sich von der ersten Richtung unterscheidende Richtung beweglich gelagert, kann das zumindest eine Rastmittel besonders sicher in einer Verriegelungsposition gehalten werden. Dabei können das Rastmittel und/oder das Sicherungsmittel translatorisch und/oder bevorzugt rotatorisch um eine Schwenkachse bewegbar sein.

Ferner wird vorgeschlagen, dass das zumindest eine Rastmittel um eine Schwenkachse auslenkbar ist, die im Wesentlichen parallel zu einer Montagerichtung des Wischblattadapters verläuft. Dadurch können eine Anordnung des zumindest einen Rastmittels und/oder die Auslenkung des zumindest einen Rastmittels besonders platzsparend in der Wischblattadaptervorrichtung angeordnet werden. Unter einer "Schwenkachse" soll in diesem Zusammenhang insbesondere eine imaginäre Achse verstanden werden, um die ein Bauteil auslenkbar ist. Ein Schwenken des Bauteils kann über ein Gelenk oder vorteilhaft über einen elastisch verformbaren Teilbereich des Bauteils erfolgen. Unter "im Wesentlichen" soll dabei in diesem Zusammenhang insbesondere eine Abweichung von weniger als 10° verstanden werden. Unter einer "Montagerichtung" soll in diesem Zusammenhang insbesondere eine Richtung verstanden werden, in die sich der Wischblattadapter bei einem Montagevorgang zur Kopplung mit einer Wischleisteneinheit bewegt. Bevorzugt steht die Montagerichtung in einem montierten Zustand senkrecht zu einer zu wischenden Oberfläche, wie zum Beispiel einer Kraftfahrzeugscheibe.

Ferner wird vorgeschlagen, dass das zumindest eine Sicherungsmittel um eine Schwenkachse auslenkbar ist, die im Wesentlichen senkrecht zu einer Montagerichtung des Wischblattadapters verläuft. Dadurch kann eine Sicherung des zumindest einen Rastmittels durch das zumindest eine Sicherungsmittel besonders stabil und zuverlässig ausgestaltet werden.

In einer weiteren Ausgestaltung der Erfindung wird vorgeschlagen, dass das zumindest eine Rastmittel eine Rastnase aufweist, die dazu vorgesehen ist, einen Formschluss mit einem Wischleistenelement der Wischleisteneinheit herzustellen. Bevorzugt handelt es sich dabei in diesem Zusammenhang um einen direkten Formschluss, bei dem die Rastnase mit dem Wischleistenelement in Berührung ist. Dadurch kann eine einfache und kostengünstige Verbindung zwischen dem zumindest einen Rastmittel und dem Wischleistenelement erreicht werden.

Ist das zumindest eine Sicherungsmittel einstückig mit dem Wischblattadapter ausgebildet, kann das zumindest eine Sicherungsmittel besonders stabil am Wischblattadapter angebracht werden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

In einer weiteren Ausgestaltung der Erfindung wird vorgeschlagen, dass das zumindest eine Rastmittel einstückig mit dem Wischblattadapter ausgebildet ist, wodurch das zumindest eine Rastmittel besonders stabil am Wischblattadapter angebracht werden kann.

Ferner wird ein Verfahren zur Montage eines Wischblattadapters einer Wischblattadaptervorrichtung, mit zumindest einem Rastmittel an einer Wischleisteneinheit vorgeschlagen, wobei das zumindest erste Rastmittel im montierten Zustand von zumindest einem Sicherungsmittel gesichert wird und wobei das Sicherungsmittel bei einem Montagevorgang des Wischblattadapters mit der Wischleisteneinheit aus einer Verriegelungsposition federelastisch ausgelenkt wird.

Dadurch kann eine besonders sichere Kopplung des Wischblattadapters an der Wischleisteneinheit erreicht werden.

Es wird des Weiteren vorgeschlagen, dass bei einem Montagevorgang des Wischblattadapters an einer Wischleisteneinheit das zumindest eine Rastmittel und das zumindest eine Sicherungsmittel in unterschiedliche Richtungen ausgelenkt werden, wodurch vorteilhaft Montagekosten und/oder Montageaufwand eingespart werden können.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer Wischblattadaptervorrichtung und einer Wischleisteneinheit,
- Fig. 2: eine perspektivische Ansicht einer Wischblattadaptervorrichtung und einer Wischleisteneinheit in einem ersten Montagevorgang,
- Fig. 3: eine perspektivische Ansicht einer Wischblattadaptervorrichtung und einer Wischleisteneinheit in einem weiteren Montagevorgang,
- Fig. 4: eine perspektivische Ansicht einer Wischblattadaptervorrichtung und einer Wischleisteneinheit in einem weiteren Montagevorgang,
- Fig. 5: eine perspektivische Ansicht einer Wischblattadaptervorrichtung und einer Wischleisteneinheit in einem weiteren Montagevorgang,
- Fig. 6: eine perspektivische Ansicht einer Wischblattadaptervorrichtung und einer Wischleisteneinheit in einem weiteren Montagevorgang,
- Fig. 7: eine perspektivische Ansicht einer Wischblattadaptervorrichtung und einer Wischleisteneinheit in einem weiteren Montagevorgang,
- Fig. 8: eine perspektivische Ansicht einer Wischblattadaptervorrichtung und einer Wischleisteneinheit in einem weiteren Montagevorgang und
- Fig. 9: einen Teilschnitt durch die Wischblattadaptervorrichtung in einem montierten Zustand.

### Beschreibung des Ausführungsbeispiels

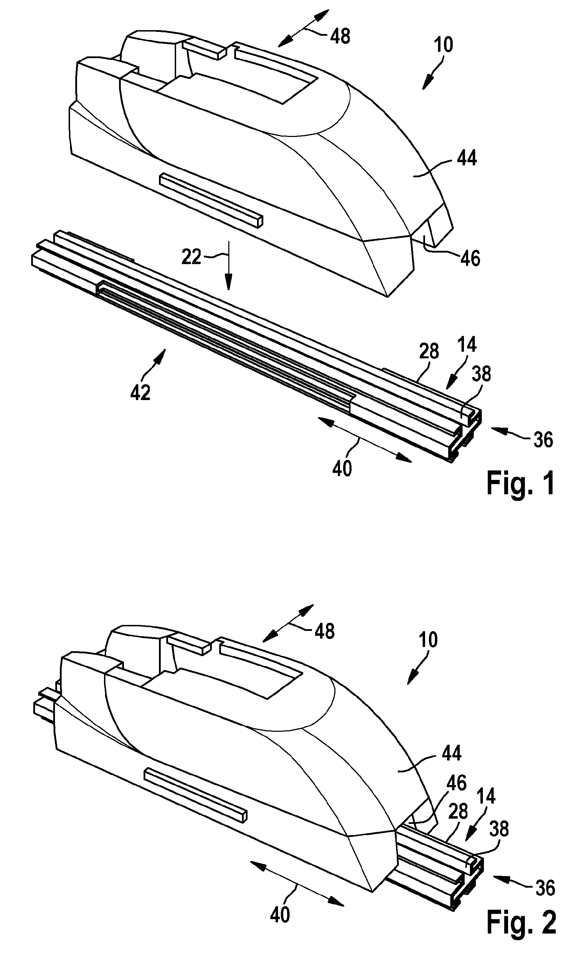

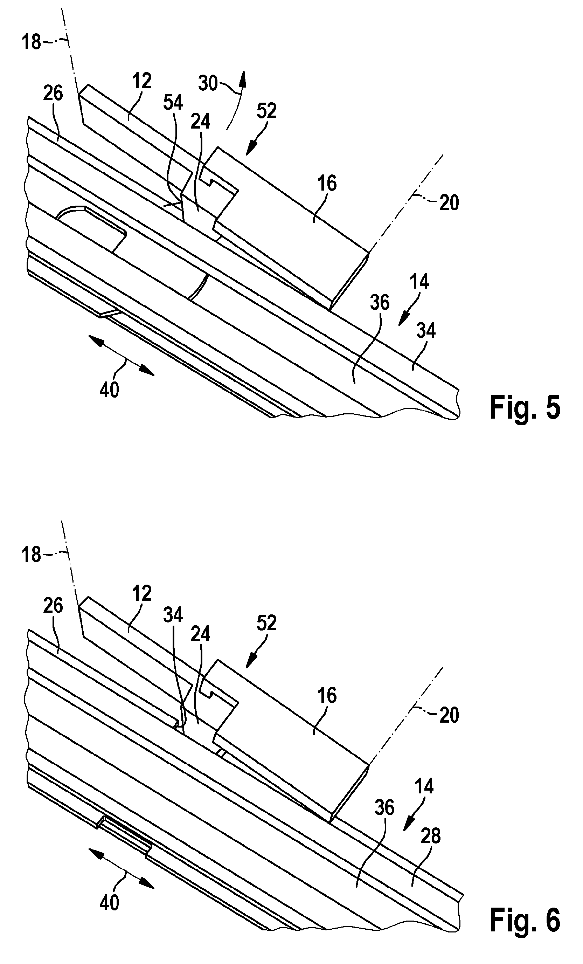

Figur 1 zeigt eine Wischblattadaptervorrichtung für eine Kraftfahrzeugscheibenwischvorrichtung. Die Wischblattadaptervorrichtung weist einen Wischblattadapter 10 auf, der durch eine Montage an einer Wischleisteneinheit 14 befestigbar ist. Die Wischleisteneinheit 14 umfasst ein lang gestrecktes Wischleistenelement 28, das einen Längsführungskanal 36 zur Führung eines Trägerelements 26 (Figur 5) aufweist. Der Längsführungskanal 36 umfasst eine Längsöffnung 38, die sich in eine Längsrichtung 40 des Wischleistenelements 28 über den gesamten Längsführungskanal 36 erstreckt.

Das Wischleistenelement 28 ist in einem Extrusionsverfahren einstückig aus einem Kunststoff hergestellt. Ein Fachmann wird in diesem Zusammenhang verschiedene, als sinnvoll erscheinende Kunststoffe in Erwägung ziehen, wie insbesondere Polyethylen, Polypropylen, Polyamid, Polyvinylchlorid und/oder Polystyrol. Ferner umfasst das Wischleistenelement 28 eine Befestigungsausnehmung 42, die, in Längsrichtung 40 betrachtet, zentral angeordnet ist. Durch die Befestigungsausnehmung 42 ist eine exakte Positionierung des Wischblattadapters 10 gegeben. Das Trägerelement 26 ist aus einem Federstahl hergestellt und dazu vorgesehen, die Wischleisteneinheit 14 elastisch auslenkbar zu formen.

Der Wischblattadapter 10 weist einen Grundkörper 44 mit einer Montageausnehmung 46 auf, die zur Aufnahme der Wischleisteneinheit 14 bei einer Montage vorgesehen ist. Der Wischblattadapter 10 bewegt sich bei einer Montage in eine Montagerichtung 22. Die Montagerichtung 22 steht senkrecht zur Längsrichtung 40 des Wischleistenelements 28.

Figur 2 zeigt die Wischblattadaptervorrichtung in einem nächsten Montageschritt. Der Wischblattadapter 10 ist durch eine Bewegung in Montagerichtung auf die Wischleisteneinheit 14 aufgesetzt. Dabei umgreift der Grundkörper 44 des Wischblattadapters 10 die Wischleisteneinheit 14. Die Wischleisteneinheit 14 ist teilweise innerhalb der Montageausnehmung 46 angeordnet. Eine Bewegung des Wischblattadapters 10 relativ zur Wischleisteneinheit 14 ist in Längsrichtung 40 vermieden.

Der Wischblattadapter 10 weist ferner ein federelastisches Rastmittel 12 zur Kopplung an die Wischleisteneinheit 14 auf. Das Rastmittel 12 wird bei einer Montage elastisch um eine Schwenkachse 18 ausgelenkt. Die Schwenkachse 18 verläuft parallel zur Montagerichtung 22 des Wischblattadapters 10. Ferner weist das Rastmittel 12 eine Rastnase 24 auf, die in einem montierten Zustand einen Formschluss mit dem Trägerelement 26 herstellt.

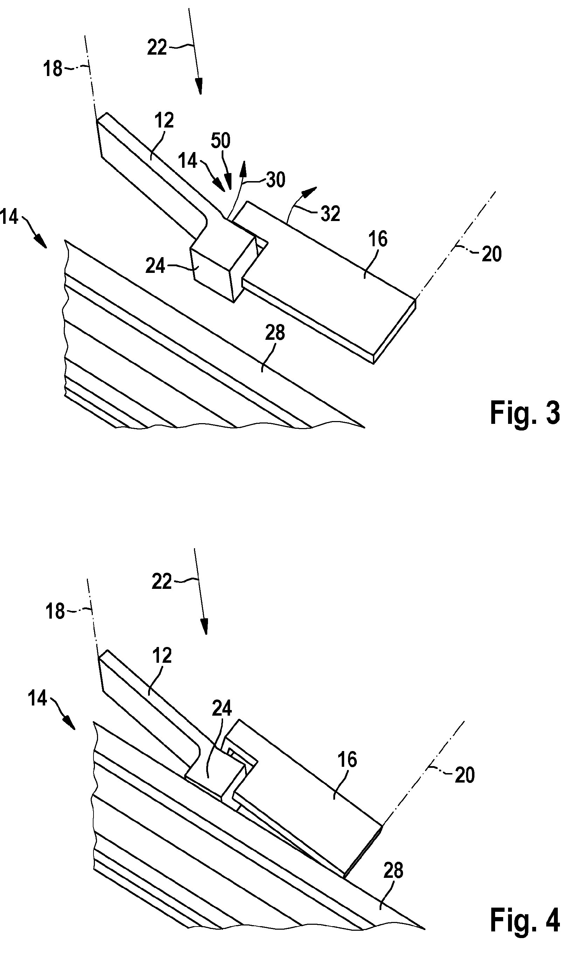

Die Wischblattadaptervorrichtung weist außerdem ein federelastisches Sicherungsmittel 16 auf, das einstückig mit dem Wischblattadapter 10 ausgebildet ist und das das Rastmittel 12 in einem montierten Zustand sichert. Figur 3 zeigt das Rastmittel 12 und das Sicherungsmittel 16 in einer perspektivischen Ansicht vor einer Montage mit der Wischleisteneinheit 14. Aus Gründen der Übersichtlichkeit ist der Wischblattadapter 10 in den Figuren 3 bis 8 nicht dargestellt, obgleich dieser mit dem Rastmittel 12 und dem Sicherungsmittel 16 einstückig ausgebildet ist.

Im ersten Montageschritt, wie auch in Figur 1 gezeigt, befindet sich der Wischblattadapter 10 oberhalb der Wischleisteneinheit 14. Das Rastmittel 12 und das Sicherungsmittel 16 befinden sich in einer Verriegelungsposition (Figur 3). Das federelastische Rastmittel 12 sowie das federelastische Sicherungsmittel 16 weisen in der Verriegelungsposition eine geringere Federspannung auf als in einem ausgelenkten Zustand. Dabei liegen das Rastmittel 12 und das Sicherungsmittel 16 in einem Kontaktbereich 50 aneinander an.

Das Rastmittel 12 ist in eine erste Richtung 30 beweglich gelagert. Das Sicherungsmittel 16 ist in eine weitere, sich von der ersten Richtung 30 unterscheidende Richtung 32 schwenkbar gelagert. Die erste Richtung 30 verläuft um die Schwenkachse 18. Die weitere Richtung 32 verläuft um eine weitere Schwenkachse 20, die senkrecht zur Montagerichtung 22 verläuft.

Die Schwenkachse 20 schließt mit der Schwenkachse 18 einen Winkel von 90° ein. Somit werden bei einem Montagevorgang des Wischblattadapters 10 an der Wischleisteneinheit 14 das Rastmittel 12 und das Sicherungsmittel 16 aus der Verriegelungsposition elastisch in unterschiedliche Richtungen 30, 32 ausgelenkt. Ein Schwenken des Rastmittels 12 um die Schwenkachse 18 ist in der Verriegelungsposition durch das Sicherungsmittel 16 blockiert. Es wäre in diesem Zusammenhang jedoch auch denkbar, dass ein Fachmann das Rastmittel 12 oder das Sicherungsmittel 16 translatorisch bewegbar ausgestaltet.

Bei einem Aufsetzen des Wischblattadapters 10 auf die Wischleisteneinheit 14 wird das Sicherungsmittel 16 um die Schwenkachse 20 ausgelenkt (Figur 4). Die Schwenkachse 20 verläuft parallel zu einer Wischrichtung 48, in die sich in einem Betriebszustand der Kraftfahrzeugscheibenwischvorrichtung der Wischblattadapter 10 und mithin die Wischleisteneinheit 14 bewegt.

Durch das ausgelenkte Sicherungsmittel 16 ist das Rastmittel 12 nicht länger gesichert, das heißt, eine Drehung des Rastmittels 12 um die Schwenkachse 18 ist entgegen einer Federkraft möglich.

In einem weiteren Montageschritt wird das Trägerelement 26 translatorisch parallel zur Längsrichtung 40 in den Längsführungskanal 36 des Wischleistenelements 28 eingeschoben (Figur 5). Dabei drückt das Trägerelement 26 in einem Endbereich 52 gegen eine Anlagefläche 54 der Rastnase 24. Das Rastmittel 12 wird dadurch entgegen einer Federkraft um die Schwenkachse 18 in eine Richtung 30 ausgelenkt.

Die Anlagefläche 54 schließt mit der Längsrichtung 40 einen stumpfen Winkel ein. Relativ zur Bewegungsrichtung des Trägerelements 26 ist die Anlagefläche 54 schräg gestellt. Eine Bewegung des Trägerelements 26 parallel zur Längsrichtung 40 bewirkt somit eine Bewegung der Rastnase 24 im Wesentlichen quer zur Längsrichtung 40.

Das Trägerelement 26 wird nun an der ausgelenkten Rastnase 24 weiter in den Längsführungskanal 36 geschoben. In Längsrichtung 40 betrachtet, ist im Trägerelement 26 zentral eine Rastausnehmung 34 angeordnet. Bewegt sich die Rastnase 24 über die Rastausnehmung 34, wird sie durch die Federkraft des Rastmittels 12 in die Rastausnehmung 34 hineingedrückt (Figur 6). Die Rastausnehmung 34 weist eine Negativform zur Rastnase 24 auf, so dass eine passgenaue Formschlussverbindung zwischen Trägerelement 26 und Rastnase 24 innerhalb der Rastausnehmung 34 entsteht.

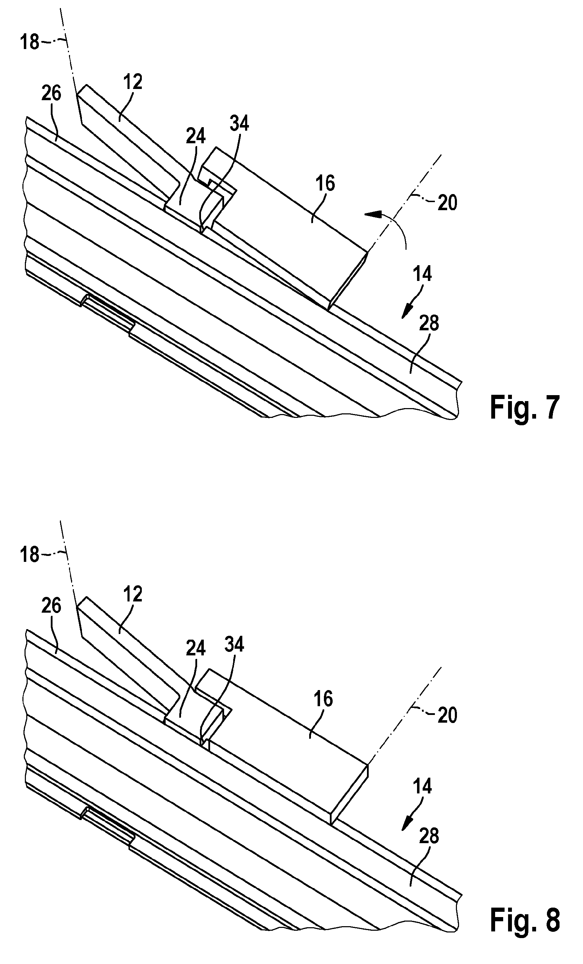

Liegt die Rastnase 24 in der Rastausnehmung 34 an, ist das Sicherungsmittel 16 nicht länger vom Rastmittel 12 in seiner Bewegungsfreiheit eingeschränkt und bewegt sich federelastisch um die Schwenkachse 20. Schließlich ist das Sicherungsmittel 16 hinter dem Rastmittel 12 angeordnet und liegt bündig an diesem an (Figur 8).

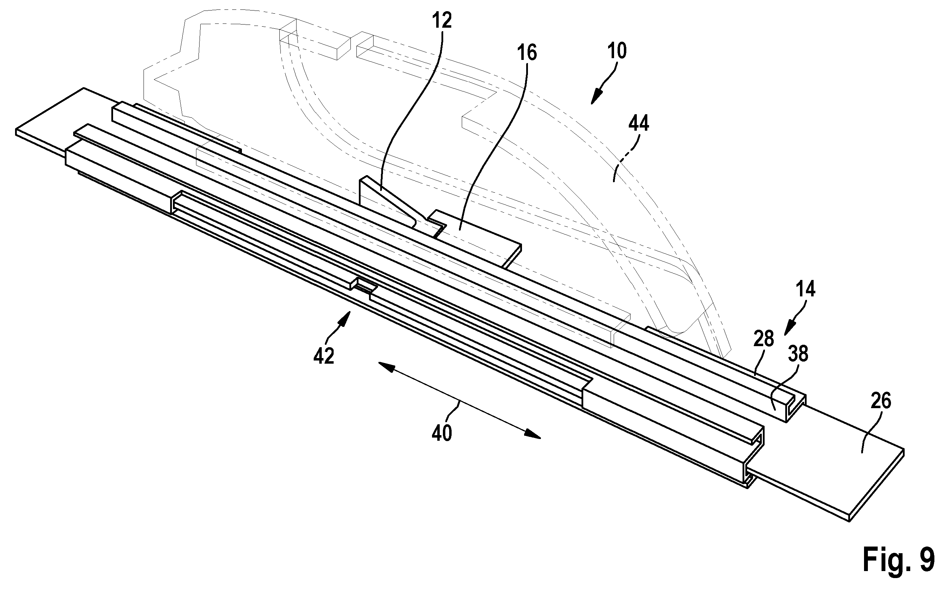

Figur 9 zeigt einen Teilschnitt der Wischblattadaptervorrichtung mit der Wischleisteneinheit 14 in einem montierten Zustand. Der Wischblattadapter 10 ist innerhalb der Befestigungsausnehmung 42 des Wischleistenelements 28 angeordnet. Das Rastmittel 12 und das Sicherungsmittel 16 befinden sich in der Verriegelungsposition. Die Rastnase 24 sichert das Trägerelement 26 vor einem Verschieben relativ zum Wischleistenelement 28 in Längsrichtung 40.

Das Sicherungsmittel sichert das Rastmittel 12 vor einer Bewegung aus der Verriegelungsposition. Es ist für einen Fachmann auch denkbar, weitere Rastmittel und Sicherungsmittel in die Wischblattadaptervorrichtung zu integrieren. Insbesondere ein zweites Rastmittel und ein zweites Sicherungsmittel, welche jeweils dem Rastmittel 12 und dem Sicherungsmittel 16 gegenüberliegen, können auf einfache Weise zur vorliegenden Erfindung hinzugefügt werden.

## Patentansprüche

1. Wischblattadaptervorrichtung, insbesondere für eine Kraftfahrzeugscheibenwischvorrichtung, mit einem Wischblattadapter (10), der zumindest ein federelastisches Rastmittel (12) zum Koppeln an eine Wischleisteneinheit (14) aufweist und mit zumindest einem Sicherungsmittel (16), das dazu vorgesehen ist, das zumindest eine Rastmittel (12) in einem montierten Zustand zu sichern, **dadurch gekennzeichnet, dass** das zumindest eine Sicherungsmittel (16) dazu vorgesehen ist, bei einem Montagevorgang des Wischblattadapters (10) mit der Wischleisteneinheit (14) aus einer Verriegelungsposition federelastisch ausgelenkt zu werden.

2. Wischblattadaptervorrichtung nach Anspruch 1, **dadurch gekennzeichnet, dass** das zumindest eine Rastmittel (12) in eine erste Richtung (30) beweglich gelagert ist und das zumindest eine Sicherungsmittel (16) in eine weitere, sich von der ersten Richtung (30) unterscheidende Richtung (32) beweglich gelagert ist.

3. Wischblattadaptervorrichtung nach einem der vorhergehenden Ansprüche, **dadurch gekennzeichnet, dass** das zumindest eine Rastmittel (12) um eine Schwenkachse (18) auslenkbar ist, die im Wesentlichen parallel zu einer Montagerichtung (22) des Wischblattadapters (10) verläuft.

4. Wischblattadaptervorrichtung nach einem der vorhergehenden Ansprüche, **dadurch gekennzeichnet, dass** das zumindest eine Sicherungsmittel (16) um eine Schwenkachse (20) auslenkbar ist, die im Wesentlichen senkrecht zu einer Montagerichtung (22) des Wischblattadapters (10) verläuft.

5. Wischblattadaptervorrichtung nach einem der vorhergehenden Ansprüche, **dadurch gekennzeichnet, dass** das zumindest eine Rastmittel (12) eine Rastnase (24) aufweist, die dazu vorgesehen ist, einen Formschluss mit einem Trägerelement (26) der Wischleisteneinheit (14) herzustellen.

6. Wischblattadaptervorrichtung nach einem der vorhergehenden Ansprüche, **dadurch gekennzeichnet, dass** das zumindest eine Sicherungsmittel (16) einstückig mit dem Wischblattadapter (10) ausgebildet ist.

7. Wischblattadaptervorrichtung nach einem der vorhergehenden Ansprüche, **dadurch gekennzeichnet, dass** das zumindest eine Rastmittel (12) einstückig mit dem Wischblattadapter (10) ausgebildet ist.

8. Wischblattadaptervorrichtung nach einem der vorhergehenden Ansprüche, **dadurch gekennzeichnet, dass** das zumindest eine Sicherungsmittel (16) in einem montierten Zustand einen Formschluss mit dem zumindest einen Rastmittel (12) bildet.

9. Verfahren zur Montage eines Wischblattadapters (10) einer Wischblattadaptervorrichtung nach einem der vorhergehenden Ansprüche, mit zumindest einem Rastmittel (12) an einer Wischleisteneinheit (14), wobei das zumindest erste Rastmittel (12) im montierten Zustand von zumindest einem Sicherungsmittel (16) gesichert wird, **dadurch gekennzeichnet, dass** das zumindest eine Sicherungsmittel (16) bei einem Montagevorgang des Wischblattadapters (10) mit der Wischleisteneinheit (14) aus einer Verriegelungsposition federelastisch ausgelenkt wird.

10. Verfahren nach Anspruch 9, **dadurch gekennzeichnet, dass** bei einem Montagevorgang des Wischblattadapters (10) an einer Wischleisteneinheit (14) das zumindest eine Rastmittel (12) und das zumindest eine Sicherungsmittel (16) in unterschiedliche Richtungen (30, 32) ausgelenkt werden.

11. System mit einem Wischblattadapter (10) einer Wischblattadaptervorrichtung nach einem der vorhergehenden Ansprüche sowie mit einer Wischleisteneinheit (14) und einem Wischleistenelement (28), wobei der Wischblattadapter (10) zumindest ein Rastmittel (12) und zumindest ein Sicherungsmittel (16) aufweist und das zumindest eine Rastmittel (12) in einem montierten Zustand einen Formschluss mit dem Wischleistenelement (28) bildet und vom zumindest einen Sicherungsmittel (16) gesichert ist, **dadurch gekennzeichnet, dass** das zumindest eine Sicherungsmittel (16) dazu vorgesehen ist, bei einem Montagevorgang des Wischblattadapters (10) mit der Wischleisteneinheit (14) aus einer Verriegelungsposition federelastisch ausgelenkt zu werden.

## Claims

1. Wiper blade adaptor device, in particular for a motor vehicle windscreen wiper device, with a wiper blade adaptor (10) which has at least one spring-elastic latching means (12) for coupling to a wiper strip unit (14), and with at least one securing means (16) which is provided for securing the at least one latching means (12) in a mounted stage, **characterized in that** the at least one securing means (16) is provided to be deflected spring-elastically out of a locking position during an installation operation of the wiper blade adaptor (10) with the wiper strip unit (14).

2. Wiper blade adaptor device according to Claim 1, **characterized in that** the at least one latching means (12) is mounted so as to be movable in a first direction (30) and the at least one securing means (16) is mounted so as to be movable in a further direction (32) differing from the first direction (30).

3. Wiper blade adaptor device according to either of the preceding claims, **characterized in that** the at least one latching means (12) can be deflected about a pivot axis (18) which runs substantially parallel to an installation direction (22) of the wiper blade adaptor (10).

4. Wiper blade adaptor device according to one of the preceding claims, **characterized in that** the at least one securing means (16) can be deflected about a pivot axis (20) which runs substantially perpendicularly to an installation direction (22) of the wiper blade adaptor (10).

5. Wiper blade adaptor device according to one of the preceding claims, **characterized in that** the at least one latching means (12) has a latching lug (24) which is provided for producing a form-fitting connection with a support element (26) of the wiper strip unit (14).

6. Wiper blade adaptor device according to one of the preceding claims, **characterized in that** the at least one securing means (16) is formed integrally with the wiper blade adaptor (10).

7. Wiper blade adaptor device according to one of the preceding claims, **characterized in that** the at least one latching means (12) is formed integrally with the wiper blade adaptor (10).

8. Wiper blade adaptor device according to one of the preceding claims, **characterized in that** the at least one securing means (16) in a mounted state forms a form-fitting connection with the at least one latching means (12).

9. Method for installing a wiper blade adaptor (10) of a wiper blade adaptor device according to one of the preceding claims, with at least one latching means (12) on a wiper strip unit (14), wherein the at least first latching means (12) is secured in the mounted state by at least one securing means (16), **characterized in that** the at least one securing means (16) is deflected spring-elastically out of a locking position during an installation operation of the wiper blade adaptor (10) with the wiper strip unit (14).

10. Method according to Claim 9, **characterized in that** the at least one latching means (12) and the at least one securing means (16) are deflected in different directions (30, 32) during an installation operation of the wiper blade adaptor (10) on a wiper strip unit (14).

11. System with a wiper blade adaptor (10) of a wiper blade adaptor device according to one of the preceding claims and with a wiper strip unit (14) and a wiper strip element (28), wherein the wiper blade adaptor (10) has at least one latching means (12) and at least one securing means (16), and the at least one latching means (12) in a mounted state forms a form-fitting connection with the wiper strip element (28) and is secured by the at least one securing means (16), **characterized in that** the at least one securing means (16) is provided to be deflected spring-elastically out of a locking position during an installation operation of the wiper blade adapter (10) with the wiper strip unit (14).

## Revendications

1. Dispositif d'adaptateur de balai d'essuie-glace, notamment pour un dispositif d'essuie-glace de véhicule automobile, avec un adaptateur de balai d'essuie-glace (10) comportant au moins un moyen d'encliquetage (12) à élasticité par ressort pour le couplage à une unité de baguettes d'essuyage (14) et avec au moins un moyen de fixation (16) prévu pour fixer l'au moins un moyen d'encliquetage (12) dans un état monté, **caractérisé en ce que** l'au moins un moyen de fixation (16) est prévu pour être sorti de façon articulée par élasticité par ressort hors d'une position de verrouillage, lors du processus de montage de l'adaptateur de balai d'essuie-glace (10) avec l'unité de baguettes d'essuyage (14).

2. Dispositif d'adaptateur de balai d'essuie-glace selon la revendication 1, **caractérisé en ce que** l'au moins un moyen d'encliquetage (12) est disposé de façon mobile dans une première direction (30) et que l'au moins un moyen de fixation (16) est disposé de façon mobile dans une autre direction (32) distincte de la première direction (30).

3. Dispositif d'adaptateur de balai d'essuie-glace selon l'une quelconque des revendications précédentes, **caractérisé en ce que** l'au moins un moyen d'encliquetage (12) peut être dévié autour d'un axe de pivotement (18) s'étendant pour l'essentiel parallèlement à une direction de montage (22) de l'adaptateur de balai d'essuie-glace (10).

4. Dispositif d'adaptateur de balai d'essuie-glace selon l'une quelconque des revendications précédentes, **caractérisé en ce que** l'au moins un moyen de fixation (16) peut être dévié autour d'un axe de pivotement (20) s'étendant pour l'essentiel perpendiculairement à une direction de montage (22) de l'adaptateur de balai d'essuie-glace (10).

5. Dispositif d'adaptateur de balai d'essuie-glace selon l'une quelconque des revendications précédentes, **caractérisé en ce que** l'au moins un moyen d'encliquetage (12) comporte un bec d'encliquetage (24) prévu pour établir une complémentarité de formes avec un élément de support (26) de l'unité de baguettes d'essuyage (14).

6. Dispositif d'adaptateur de balai d'essuie-glace selon l'une quelconque des revendications précédentes, **caractérisé en ce que** l'au moins un moyen de fixation (16) est réalisé d'un seul tenant avec l'adaptateur de balai d'essuie-glace (10).

7. Dispositif d'adaptateur de balai d'essuie-glace selon l'une quelconque des revendications précédentes, **caractérisé en ce que** l'au moins un moyen d'encliquetage (12) est réalisé d'un seul tenant avec l'adaptateur de balai d'essuie-glace (10).

8. Dispositif d'adaptateur de balai d'essuie-glace selon l'une quelconque des revendications précédentes, **caractérisé en ce que** l'au moins un moyen de fixation (16) forme dans un état monté une complémentarité de formes avec l'au moins un moyen d'encliquetage (12).

9. Procédé de montage d'un adaptateur de balai d'essuie-glace (10) de dispositif d'adaptateur de balai d'essuie-glace selon l'une quelconque des revendications précédentes avec au moins un moyen d'encliquetage (12) à une unité de baguettes d'essuyage (14), l'au moins un premier moyen d'encliquetage (12) étant fixé à l'état monté par au moins un moyen de fixation (16), **caractérisé en ce que** l'au moins un moyen de fixation (16) est dévié de façon élastique par ressort, lors d'un processus de montage de l'adaptateur de balai d'essuie-glace (10) avec l'unité de baguettes d'essuyage (14), hors d'une position de verrouillage.

10. Procédé selon la revendication 9, **caractérisé en ce que** lors d'un processus de montage de l'adaptateur de balai d'essuie-glace (10) à une unité de baguettes d'essuyage (14), l'au moins un moyen d'encliquetage (12) et l'au moins un moyen de fixation (16) sont déviés dans des directions (30, 32) différentes.

11. Système avec un adaptateur de balai d'essuie-glace (10) de dispositif d'adaptateur de balai d'essuie-glace selon l'une quelconque des revendications précédentes ainsi qu'avec une unité de baguettes d'essuyage (14) et un élément de baguette d'essuyage (28), l'adaptateur de balai d'essuie-glace (10) comportant au moins un moyen d'encliquetage (12) et au moins un moyen de fixation (16) et l'au moins un moyen d'encliquetage (12) formant, dans un état monté, une complémentarité de formes avec l'élément de baguette d'essuyage (28) et étant fixé par au moins un moyen de fixation (16), **caractérisé en ce que** l'au moins un moyen de fixation (16) est prévu pour être dévié de façon élastique par ressort, lors d'un processus de montage de l'adaptateur de balai d'essuie-glace (10) avec l'unité de baguettes d'essuyage (14), hors d'une position de verrouillage.
